# EUROPÄISCHE PATENTSCHRIFT

(11) **EP 2 502 509 B1**
(45) Veröffentlichungstag und Bekanntmachung des Hinweises auf die Patenterteilung: **12.06.2019**
(21) Anmeldenummer: 12157037.8
(22) Anmeldetag: 27.02.2012
(51) Int. Cl.: A23N 7/04

(54) **Schälautomat für langgestrecktes Schälgut und Schälverfahren**
Automatic peeling device for elongated peeled goods and peeling method
Automate d'épluchage pour produit à éplucher étendu et procédé d'épluchage

(30) Priorität: 24.03.2011 DE 102011006038
(43) Veröffentlichungstag der Anmeldung: 26.09.2012
(73) Patentinhaber: Hepro GmbH, 33378 Rheda-Wiedenbrück (DE)
(72) Erfinder: Protte, Christoph, 33129 Delbrück (DE)
(74) Vertreter: Ostermann, Thomas

(56) Entgegenhaltungen:
- WO-A1-02/26062
- DE-C3- 2 153 130
- DE-U1- 9 203 558
- NL-A- 7 109 625
- US-A- 4 679 499

## Beschreibung

Die Erfindung betrifft einen Schälautomaten für langgestrecktes Schälgut nach dem Oberbegriff des Patentanspruchs 1.

Ein gattungsgemäßer Schälautomat für langgestrecktes Schälgut ist aus der DE 100 48 773 A1 bekannt. Dieser Schälautomat ist als ein Industrie-Schälautomat ausgebildet. Die Schneideinrichtung weist eine Mehrzahl von Messereinheiten auf, welche jeweils zwei auf gegenüberliegenden Seiten an eine Mantelfläche des Schälguts anlegbare Messer aufweisen und in eine Längsrichtung des Schälguts verfahrbar sind. Das Schälgut wird sequentiell den verschiedenen Messereinheiten zugeführt. Während des Schälguts ist das Schälgut vertikal orientiert und ortsfest in Bezug zu den Messereinheiten gehalten. Die Messereinheiten sind - bezogen auf die Längsrichtung des Schälguts - winkelversetzt zueinander angeordnet. Infolge des Winkelversatzes wird an jeder Messereinheit ein anderer Teil der Mantelfläche des Schälguts geschält. Nach beispielsweise sechs mit einem Winkelversatz von jeweils 30° zueinander angeordneten Messerstationen ist das Schälgut vollständig geschält.

Die spezielle Ausgestaltung der Schneideinrichtung gewährleistet eine hohe Schälqualität. Da auf manuelles Nachschälen vollständig verzichtet werden kann, wird mittels des Industrie-Schälautomaten ein hoher Automatisierungsgrad erreicht. Die Qualität des Schälvorgangs wird weiter verbessert, indem das Schälgut bzw. die Schneideinrichtung regelmäßig gereinigt werden. Zu diesem Zweck weist der Industrie-Schälautomat einen Wasseranschluss auf, der mit einer externen Wasserzuführung verbunden wird. Nachteilig hierbei ist, dass aufgrund der externen Wasserversorgung eine stationäre Anlage geschaffen wird, die sich beispielsweise nicht für den Einsatz auf dem Feld des Erzeugers, auf dem Wochenmarkt oder einem mobilen Verkaufsstand eignet.

Aus der WO 02/26062 A1 ist ein Schälautomat für langgestrecktes Schälgut bekannt, der eine Aufnahmeeinrichtung zum Halten des Schälgutes, eine Schneideinrichtung zum Schälen des Schälgutes, eine Antriebseinrichtung zum Bewegen der Aufnahmeeinrichtung und der Schneideinrichtung aufweist. Ferner umfasst der Schälautomat eine Zuführ- und Abführeinrichtung zum Zu- bzw. Abführen des Schälgutes bzw. geschälten Schälgutes. Die Aufnahmeeinrichtung umfasst jedoch linear bewegte Aufnahme-Organe, so dass das Schälgut an einer Stirnseite zugeführt und an einer gegenüberliegenden Stirnseite abgeführt wird. Die Zuführung des Schälgutes erfolgt mittels eines taktweise angesteuerten Förderbandes, von dem mittels einer Greif-/Schwenkeinrichtung das Schälgut zu der Aufnahmeeinrichtung geschwenkt wird.

Aus der NL 7 109 625 A ist ein Schälautomat für langgestrecktes Schälgut bekannt, welcher eine Aufnahmeeinrichtung zum Halten des Schälgutes, eine Schneideinrichtung zum Schälen des Schälgutes und eine Antriebseinrichtung zum Bewegen der Aufnahmeeinrichtung entlang einer senkrecht zur Schneideinrichtung verlaufenden Transportrichtung bekannt ist. Die Aufnahmeeinrichtung ist um eine Drehachse verdrehbar angeordnet, wobei die Drehachse in Schneidrichtung der Schneideinrichtung verläuft. Auf diese Weise kann Schälgut der Aufnahmeeinrichtung zugeführt und abgeführt werden, sobald das Schälgut sequenziell den einzelnen Arbeitsstationen zum winkelversetzten Schneiden derselben durchlaufen hat.

Aufgabe der vorliegenden Erfindung ist es daher, einen Schälautomaten sowie ein Schälverfahren derart anzugeben, dass ein Schälen auf einfache Weise bei hoher Schälqualität sowie kompakter Anordnung gewährleistet ist.

Zur Lösung der Aufgabe weist die Erfindung die Merkmale des Patentanspruchs 1 auf.

Der besondere Vorteil der Erfindung besteht darin, dass ein platzsparender Schälautomat bereitgestellt wird, der entweder stationär in einer Verarbeitungshalle oder mobil an unterschiedlichen Orten eingesetzt werden kann. Grundgedanke der Erfindung ist es, über ein Transport-Koppelmodul zum einen ein Aufnahme-Drehorgan zur Halterung des Schälguts während des Schälens desselben und zum anderen ein Ablage-Drehorgan zur Bereitstellung des zu schälenden Schälguts bzw. gegebenenfalls zur Abführung des geschälten Schälguts um jeweilige Drehachsen zu verdrehen, wobei die Drehachsen parallel zur Erstreckungsrichtung des in dem Aufnahme-Drehorgan aufgenommenen Schälguts verläuft. Das Transport-Koppelmodul ermöglicht ein definiertes und aufeinander abgestimmtes Verdrehen des Aufnahme-Drehorgans auf der einen Seite und des Ablage-Drehorgans auf der anderen Seite. Durch die Anordnung des bereitgestellten Schälguts einerseits und des aufgenommenen Schälguts andererseits an entsprechenden Drehorganen kann ein platzsparender Aufbau des Schälautomaten geschaffen werden. Insbesondere wenn das Schälgut auf einer Kreisbahn transportiert wird, kann der Schälautomat einen einfachen und kompakten Aufbau aufweisen. Nach der Erfindung umfasst das Transport-Koppelmodul ein Stellelement, das mit einer konstanten Geschwindigkeit rotiert und zum einen das Aufnahme-Drehorgan in einer ersten Drehrichtung und zum anderen das Ablage-Drehorgan in einer gleichen zweiten Drehrichtung antreibt. Vorteilhaft kann hierdurch die Zuführung bzw. Bewegung des Schälguts während des Schälvorgangs nicht nur über eine gemeinsame Antriebseinrichtung, sondern auch über ein gemeinsames Stellorgan (Stellelement) unter direkter wechselseitiger Kopplung definiert bewegt werden.

Nach einer bevorzugten Ausführungsform der Erfindung ist das Aufnahme-Drehorgan durch ein erstes Stirnrad und das Ablage-Drehorgan durch ein zweites Stirnrad ausgebildet, wobei ein Steg des Stellelementes intermittierend in Schlitze des ersten Stirnrades bzw. des zweiten Stirnrades eingreift. Vorteilhaft kann hierdurch eine definierte und unter eindeutiger Bewegungskopplung zum einen das Aufnahme-Drehorgan und zum anderen das Ablage-Drehorgan bewegt werden.

Nach einer Weiterbildung der Erfindung weist das Stellelement einen Blockierabschnitt auf, so dass das erste Stirnrad während der Eingriffsstellung des Stegs in dem zweiten Stirnrad einerseits und das zweite Stirnrad während der Eingriffstellung des Stegs in dem ersten Stirnrad festgesetzt sind. Vorteilhaft kann hierdurch eine eindeutige Verstellung der beiden Stirnräder unter direkter gegenseitiger Kopplung erfolgen.

Nach einer Weiterbildung der Erfindung sind sowohl das Transport-Koppelmodul, das Schneid-Koppelmodul sowie das Greif-Koppelmodul mit einer gemeinsamen Antriebseinrichtung verbunden, so dass mit vorzugsweise einem einzigen Elektromotor alle zu bewegenden Organe angetrieben werden können.

Nach einer Weiterbildung der Erfindung weist die Antriebseinrichtung lediglich einen Elektromotor auf, der mittels einer elektrischen Kleinspannung betreibbar ist. Vorteilhaft kann der Schälautomat beispielsweise mittels einer Nutzfahrzeugbatterie (24 Volt Gleichspannung) oder mittels einer handelsüblichen PKW-Batterie (12 Volt Gleichspannung) betrieben werden. Ferner kann ein Stromerzeugungsaggregat zur Versorgung des Schälautomaten mit elektrischer Energie verwendet werden. Der Anschluss des Schälautomaten an das elektrische Versorgungsnetz (z.B. 230 V Wechselspannung) ist nicht erforderlich, so dass der Schälautomat für den mobilen Einsatz besonders geeignet ist. Beispielsweise kann der Schälautomat auf Wochenmärkten, im Bereich mobiler Verkaufsstände oder direkt auf dem Feld betrieben werden. Als elektrische Kleinspannung im Sinne der Erfindung werden allgemein Wechselspannungen bis 50 Volt Effektivwert und Gleichspannung bis 120 Volt bezeichnet. Vorzugsweise wird der Schälautomat mit einer Gleichspannung von 60 Volt oder weniger betrieben.

Nach einer Weiterbildung der Erfindung ist in einer Ebene oberhalb und unterhalb einer durch die Aufnahmeeinrichtung, Schneideinrichtung, Zuführ- und Abführeinrichtung, Koppeleinrichtung und Antriebseinrichtung gebildeten Baueinheit ein Vorratsbehälter zur Aufnahme von Reinigungsflüssigkeit angeordnet. Vorteilhaft kann hierdurch auf die Ausbildung eines Umlaufsystems für die Reinigungsflüssigkeit und die hierdurch bedingte Filterung bzw. Aufbereitung der Reinigungsflüssigkeit nach dem Reinigen verzichtet werden. Eine Verunreinigung der Reinigungsflüssigkeit wird insofern vermieden. Die Reinigungsflüssigkeit wird dann lediglich einmal zur Säuberung des Schälguts bzw. der Schneideinrichtung verwendet. Sofern beispielsweise Wasser als Reinigungsflüssigkeit verwendet wird, kann das untere Vorratsbehältnis in die Kanalisation oder unmittelbar in die Umwelt entleert werden. Ein Transport der Reinigungsflüssigkeit nach deren Verwendung kann hierbei entfallen. Vorteilhaft kann auf das Vorsehen einer Förderpumpe verzichtet werden. Die Reinigungsflüssigkeit kann aus dem als Hochspeicher dienenden ersten Vorratsbehältnis selbsttätig ausfließen und über ein Zuleitungssystem dem zu reinigenden Schälgut bzw. der Schneideinrichtung zugeführt werden. Durch den Verzicht auf die Förderpumpe ist der Schälautomat kostengünstig ausgebildet. Zusätzlich reduziert sich der Energiebedarf des Systems. Dies ist insbesondere bei autarkem Betrieb des Systems mittels einer Batterie oder dergleichen von Vorteil. Nach dem Reinigungsvorgang wird die Reinigungsflüssigkeit in dem unteren Vorratsbehältnis aufgefangen. In dem unteren Vorratsbehältnis kann beispielsweise ein Fangkorb integriert sein, in dem die von dem Schälgut getrennten Schalen gesammelt werden. Schalen und verwendete Reinigungsflüssigkeit können dann in einfacher Weise getrennt weiterbehandelt werden.

Zur Lösung der Aufgabe weist die Erfindung die Merkmale des Patentanspruchs 10 auf.

Vorteilhaft ermöglicht das erfindungsgemäße Verfahren ein definiertes aufeinander abgestimmtes Bewegen des Schälguts in Bestückungsstationen, an denen es geschält wird, und das Zu- gegebenenfalls Abführen des Schälguts vor bzw. nach dem Schälen. Vorteilhaft wird hierdurch ein platzsparender Schälautomat geschaffen, der robust und wartungsarm ausgestaltet ist. Nach Beendigung eines Schälvorgangs einer ersten Charge von Schälgut kann ein Neustart des Schälautomaten zum Schälen von Schälgut einer zweiten Charge in definierter Weise beginnen. Zum Schälen der zweiten Charge von Schälgut braucht die Antriebseinheit lediglich eingeschaltet werden, ohne dass Rüstzeiten aufgewendet werden müssen.

Das Schälgut wird während des Schälens sequentiell zu einer Anzahl von Arbeitsstationen verbracht, denen jeweils ein Messerträgerpaar zugeordnet ist. Aufnahmen für Schälgut, dem keine Messereinheit zugeordnet ist, dienen als Bestückungsstation bzw. Entnahmestation, an denen das Schälgut in die aufrechte Schneidposition verbracht bzw. entnommen wird. Jedem in der Arbeitsstation befindlichen Schälgut ist eine Messereinheit mit an einer Mantelfläche des Schälguts anlegbaren Messerpaaren zugeordnet, so dass eine Mehrzahl von Schälgütern gleichzeitig geschält werden kann. Vorzugsweise sind die den Arbeitsstationen zugeordneten Messerpaare derart winkelversetzt zueinander angeordnet, dass das Schälgut nach dem Durchlaufen aller Arbeitsstationen vollumfänglich geschält ist. Vorteilhaft kann durch die winkelversetzte Anordnung der Messerpaare ein gleichmäßiger, verlustarmer und vollständiger Schälvorgang in besonders einfacher Weise realisiert werden.

Vorzugsweise ist das Schälgut entlang einer Kreisbahn geführt zwischen den Arbeitsstationen bewegbar. Die Arbeitsstationen bzw. die Bestückungs- und Entnahmestation sind entlang dieser kreisförmigen Transportbahn angeordnet. Vorteilhaft ergibt sich hierdurch ein konstruktiv einfacher Aufbau mit der Folge, dass eine hohe Anzahl an Gleichteilen verwendet werden kann und die Fertigungskosten gering sind. Weitere Vorteile der Erfindung ergeben sich aus den weiteren Unteransprüchen.

Nach einer Variante der Erfindung sind mehrere Schälautomaten in einem Maschinenpark integriert angeordnet, so dass ein erhöhter Durchsatz des Schälgutes gewährleistet ist. Vorzugsweise wird das Schälgut über gemeinsame Fördermittel zu den mehreren Schälautomaten zugeführt bzw. im geschälten Zustand abgeführt und in entsprechenden Transportbehältern gesammelt.

Ausführungsbeispiele werden nachfolgend anhand der Zeichnungen näher erläutert.

Es zeigen:
- Figur 1: eine perspektivische Darstellung von mechanischen Bauteilen eines Schälautomaten von einer Greifseite des Schälguts her gesehen,
- Figur 2: eine schematische Darstellung von mechanischen Bauteilen des Schälautomaten von einer Ablageseite für des Schälguts her gesehen,
- Figur 3: eine Seitenansicht des Schälautomaten, bei der sich eine Schneideinrichtung sowie eine Greifeinrichtung in einer unteren Hubposition befinden, in der ein Schälgut durch die Greifeinrichtung erfasst wird,
- Figur 4: eine Seitenansicht des Schälautomaten in einer Zwischenstellung der Schneideinrichtung und der Greifeinrichtung,
- Figur 5: einen mittleren Vertikalschnitt durch den Schälautomaten in einer oberen Hubposition der Schneideinrichtung und der Greifeinrichtung, wobei zur Verdeutlichung eine vordere Tragsäule des Schälautomaten nicht dargestellt ist,
- Figur 6: eine Draufsicht auf den Schälautomaten,
- Figur 7: einen Horizontalschnitt durch den Schälautomaten in einem zu Drehtellern nahen Bereich,
- Figur 8: ein Zeitstrahldiagramm über die Hubbewegung,
- Figur 9: eine Prinzipdarstellung eines zweiten Ausführungsbeispiels des erfindungsgemäßen Schälautomaten in einer Seitenansicht mit Darstellung einer Reinigungseinrichtung,
- Figur 10: eine Schnittdarstellung des Schälautomaten gemäß Figur 9 nach der Schnittlinie A-A,
- Figur 11: eine Prinzipdarstellung einer Antriebsbewegung zur Betätigung des Schälautomaten,
- Figur 12: Prinzipdarstellung eines zweiten Ausführungsbeispiels des erfindungsgemäßen Schälautomaten in einer Seitenansicht und
- Figur 13: Schnittdarstellung des Schälautomaten gemäß Figur 12 nach der Schnittlinie B-B.

Ein erfindungsgemäßer Schälautomat dient vorzugsweise
zum Schälen von als Spargelstangen ausgebildeten stangenförmigem Schälgut. Der Schälautomat kann platzsparend an einen beliebigen Ort aufgestellt werden. Er benötigt zum Betrieb lediglich einen elektrischen Anschluss für den Antrieb.

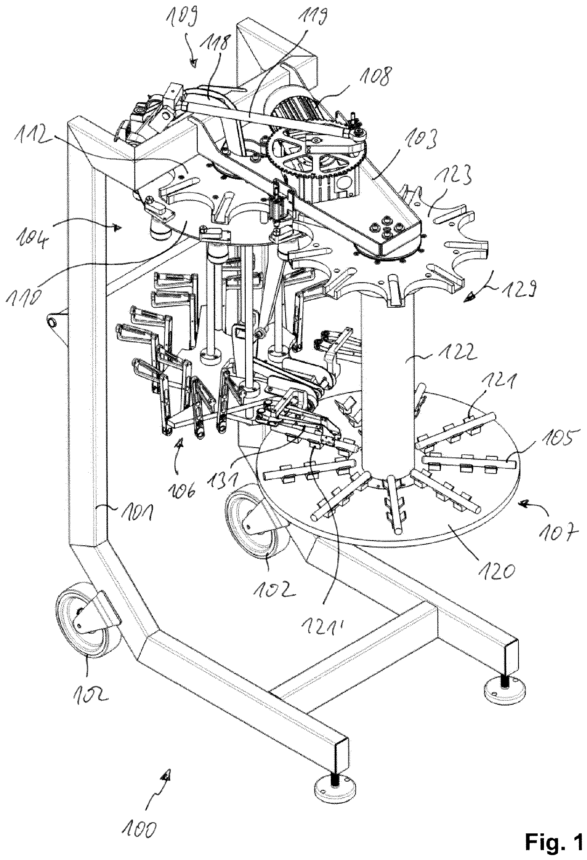

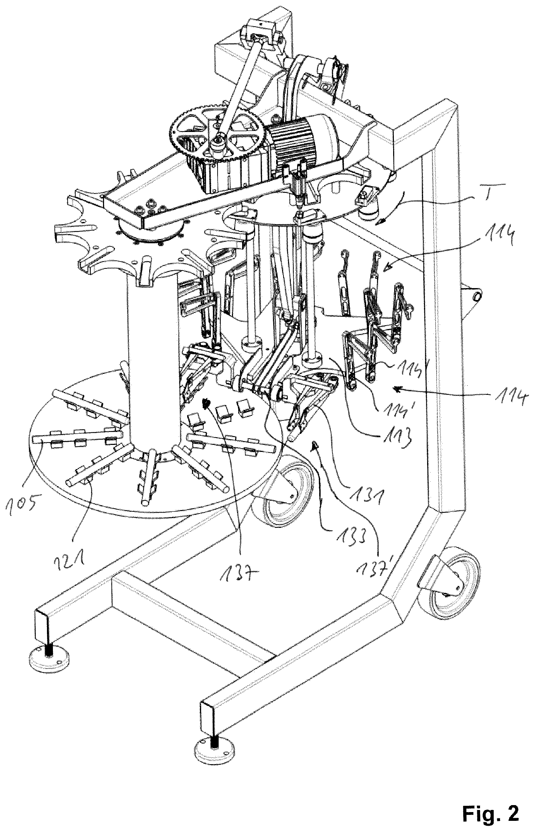

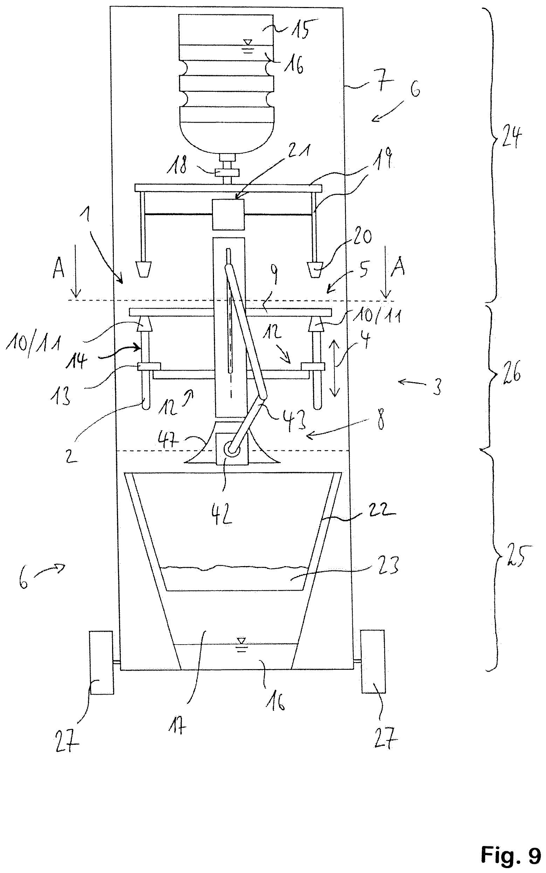

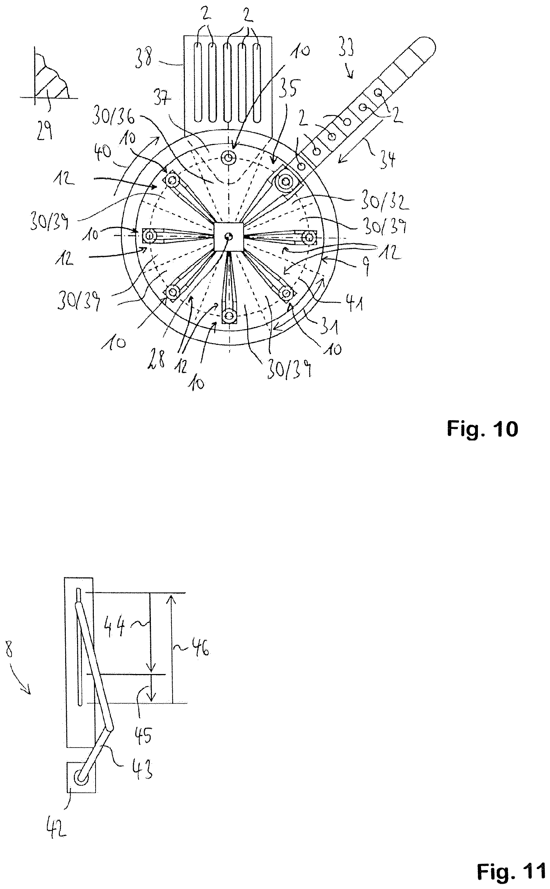

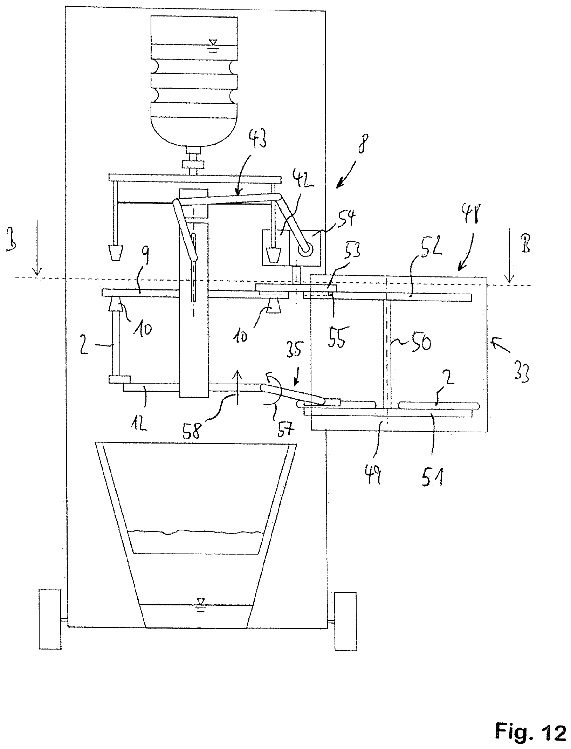

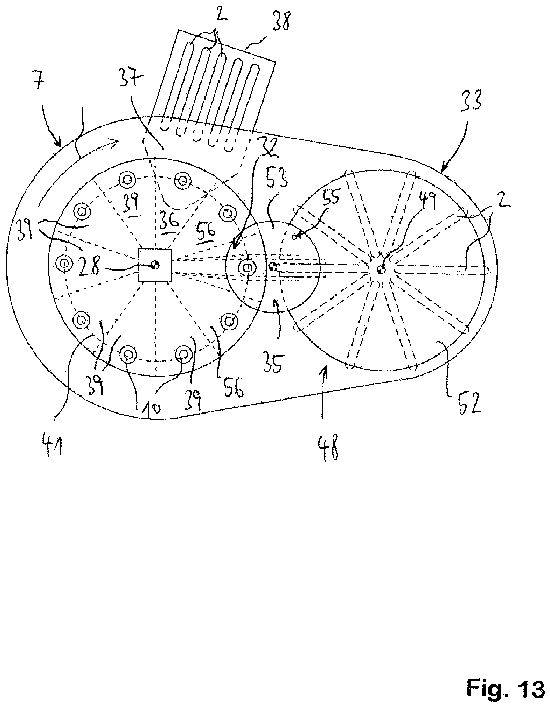

In den Figuren 1 bis 8 wird ein Schälautomat 100 beschrieben, der gemäß des in den Figuren 9 bis 13 dargestellten Schälautomaten vorzugsweise eine Reinigungseinrichtung aufweisen kann.

Der Schälautomat 100 weist einen L-förmigen Träger 101 auf, der über Rollen 102 verfügt, so dass der Schälautomat 100 an einen gewünschten Ort positioniert werden kann.

In einem oberen Bereich des Trägers 101 ragt eine Trägerplatte 103 in horizontaler Richtung ab, an der eine Aufnahmeeinrichtung 104 zum Halten des Schälguts 105 in einer aufrechten Position, eine Schneideinrichtung 106 zum Schälen des Schälguts 105 in einer längs des Schälguts 105 verlaufenden Schneidrichtung S, eine Zuführ-/Abführeinrichtung 107 zum Zuführen bzw. Abführen des Schälguts 105 zu der Aufnahmeeinrichtung 104 bzw. von der selben weg angeordnet sind. Darüber hinaus ist an der Trägerplatte 103 eine Antriebseinrichtung 108 befestigt, die über eine Koppeleinrichtung 109 zum Antrieb der Aufnahmeeinrichtung 104, der Schneideinrichtung 106 und der Zuführ-/Abführeinrichtung 107 dient.

Die Aufnahmeeinrichtung 104 weist eine um eine erste Drehachse D1 verdrehbare Drehscheibe 110 auf, an deren unteren Flachseite eine Mehrzahl von kreisförmig angeordneten tulpenförmigen Aufnahmen 111 für die Spargelstangen 105 vorgesehen sind. Die tulpenförmigen Aufnahmen 111 sind vorzugsweise in einem gleichen Umfangsabstand zueinander angeordnet. Das Aufnahme-Drehorgan (Drehscheibe) 110 ist drehfest und koaxial mit einem ersten Stirnrad 112 der Koppeleinrichtung 109 verbunden.

Die Schneideinrichtung 106 weist eine Anzahl von kreisförmig auf einer Messerträger 113 (Trägerplatte) angeordnete Messerpaare 114 auf, wobei der Messerträger 113 über ein Schneidkoppelmodul 115 der Koppeleinrichtung 109 in Schneidrichtung S bzw. quer zur Drehscheibe 110 der Aufnahmeeinrichtung 104 zwischen einer unteren Hubposition 116 und einer oberen Hubposition 117 hin- und her bewegbar ist. Die Messerpaare 114 weisen jeweils zwei gegenüberliegende Messer 114' auf, die während des Schneidens an ge-genüberliegenden Längsseiten der Spargelstange 105 anliegen. Die Messerpaare 114 sind beispielsweise um 30° winkelversetzt bezüglich einer parallel zur Schneidrichtung S verlaufenden Drehachse angeordnet, so dass während eines Hubs der Schneideeinrichtung 106 die entsprechend ortsfest in der Aufnahmeeinrichtung 104 angeordneten Spargelstangen 105 jeweils an unterschiedlichen Längsseiten geschält werden. Durch Verdrehen des Aufnahme-Drehorgans 110 um die Drehachse D1 entlang einer Transportrichtung T, die in Umfangsrichtung des Aufnahme-Drehorgans 110 verläuft, ist eine Spargelstange 105 nach einer Umdrehung des Aufnahme-Drehorgans 110 vollständig geschält. Das Schneid-Koppelmodul 115 umfasst ein Gestänge 118, das über ein Schubkurbelgetriebe 119 mit der aus einem Elektromotor gebildeten Antriebseinrichtung 108 gekoppelt ist. Vorzugsweise ist der Elektromotor 108 als ein durch eine Kleinspannung speisbarer Synchronmotor ausgebildet.

Die Zuführ-/Abführeinrichtung 107 weist ein Ablage-Drehorgan 120 (Drehscheibe) auf, das auf einer oberen Flachseite sternförmig angeordneten Ablageelemente 121 aufweist. Im vorliegenden Ausführungsbeispiel sind neun Ablageelemente 121 zur Ablage von neun Spargelstangen 105 vorgesehen, die jeweils in radialer Richtung liegend angeordnet sind. Benachbarte Spargelstangen 105 sind in einem Winkel von 40° versetzt zu einer Drehachse D2 des Ablage-Drehorgans 120 angeordnet. Das Ablage-Drehorgan 120 ist drehbar um die Drehachse D2 in einer unteren Ebene E1 angeordnet, in der sich die Messerträger 113 der Schneideinrichtung 106 während des Aufenthalts in der unteren Hubposition 116 erstrecken.

Das Ablage-Drehorgan 120 ist über eine zentrale Säule 122 drehfest mit einem zweiten Stirnrad 123 der Koppeleinrichtung 109 verbunden. Das zweite Stirnrad 123 bildet zusammen mit dem ersten Stirnrad 112 und einem zwischen demselben angeordneten Stellelement 124 ein Transport-Koppelmodul 125, mittels dessen das Aufnahme-Drehorgan 110 und das Ablage-Drehorgan 120 abwechselnd und schüttweise um einen vorgegebenen Transportwinkel verdreht werden.

Das erste Stirnrad 112 und zweite Stirnrad 123 verlaufen in einer gemeinsamen oberen Ebene E2 und weisen jeweils neun in Umfangsrichtung gleich verteilt angeordnete Schlitze 126 auf, wobei benachbarte Schlitze 126 über Mulden 127 voneinander getrennt sind.

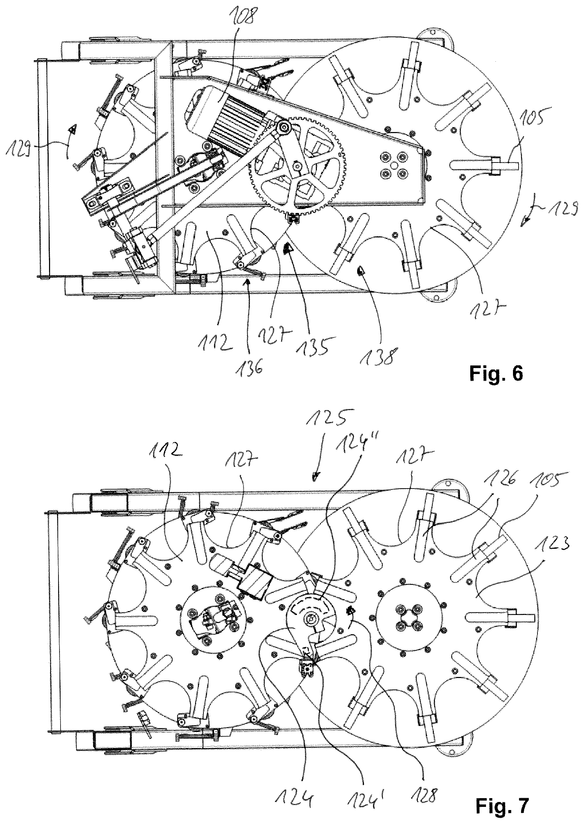

Wie besser aus Figur 7 zu ersehen ist, weist das Stellelement 124 einen Steg 124' sowie einen auf einer gegenüberliegenden Seite angeordneten bogenförmigen Blockierabschnitt 124" auf. Das Stellelement 124 ist koaxial zu einer Antriebswelle des Elektromotors 108 angeordnet. Vorzugsweise ist das Stellelement 124 direkt und fest mit der Antriebswelle des Elektromotors 108 verbunden. Das Stellelement 124 wird mittels des Elektromotors 108 mit einer konstanten Drehzahl in Drehrichtung 128 angetrieben. Der Steg 124' des Stellelementes 124 greift abwechselnd in zueinander gekehrte Schlitze 126 des ersten Stirnrades 112 und des zweiten Stirnrades 123 ein, so dass intermittierend zuerst das erste Stirnrad 112 um 40° um die erste Drehachse D1 und dann das zweite Stirnrad 123 um die zweite Drehachse D2 verdreht werden. Das erste Stirnrad 112 und das zweite Stirnrad 123 werden somit in eine gleiche Drehrichtung 129 - im vorliegenden Fall Rechtsdrehung - verdreht, die entgegensetzt zu der Drehrichtung 128 - im vorliegenden Ausführungsbeispiel Linksdrehung - orientiert ist. Damit während der schrittweisen Bewegung des ersten Stirnrades 112 und des zweiten Stirnrades 123 unter Bildung einer Eingriffstellung des Steges 124' das gegenüberliegende zweite Stirnrad 123 bzw. das erste Stirnrad 112 in einer Stillstehung verharrt, greift der Blockierabschnitt 124" in die entsprechende Mulde 127 des zweiten Stirnrades 123 bzw. ersten Stirnrades 112 ein.

Der Schälautomat 100 umfasst ferner eine Greifeinrichtung 130, die ein Paar von Greifern 131 umfasst, die über ein Greif-Koppelmodul 132 der Koppeleinrichtung 109 mit der Antriebseinrichtung 108 verbunden sind. Die Greifer 131 sind über eine Welle 133 des Greif-Koppelmoduls 132 miteinander verbunden. Die Welle 133 ist über ein Gestänge 134 mit dem Schubkurbelgetriebe 119 gekoppelt, so dass durch Drehbewegung der Antriebswelle des Elektromotors 108 die paarweise angeordneten Greifer 131 zwischen der unteren Hubposition 116 und der oberen Hubposition 117 hin und her verfahrbar sind, und zwar synchron zu der Schneideinrichtung 106.

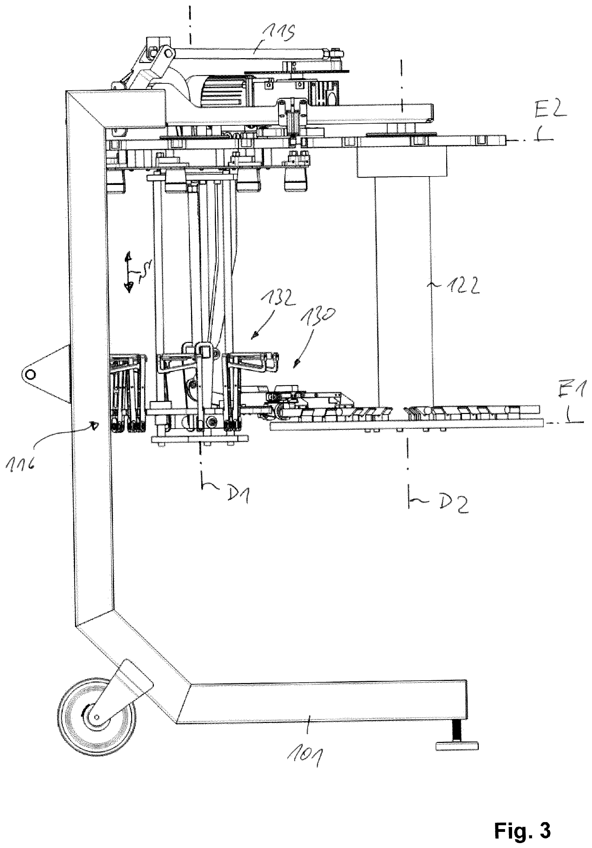

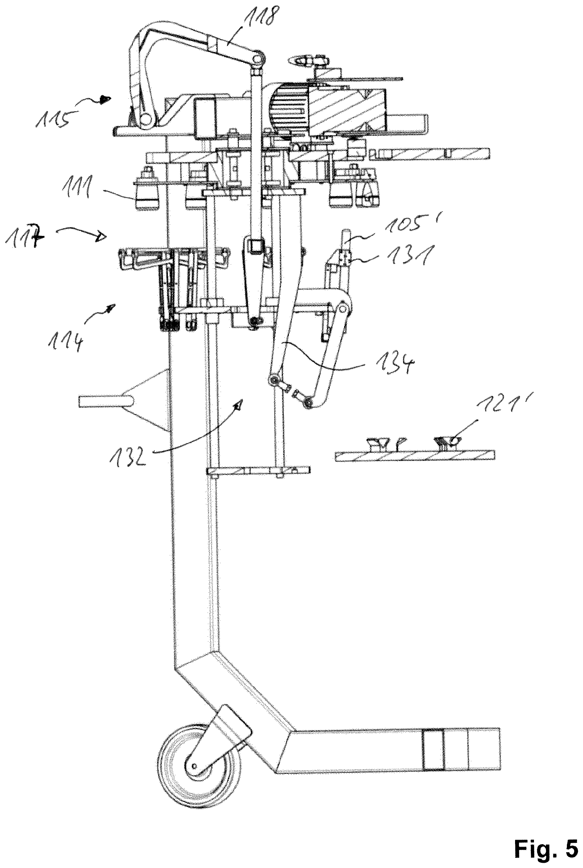

Im Folgenden wird der Schälvorgang näher beschrieben. Das Ablage-Drehorgan 120 wird vorzugsweise auf einer dem Aufnahme-Drehorgan 110 abgewandten Seite manuell mit ungeschälten Spargelstangen 105 bestückt. Befindet sich die Greifeinrichtung 130 bzw. die Schneideinrichtung 106 in der unteren Hubposition 116, siehe Figur 3, kann die in dem Ablageelement 121' an einem Übergabeort 137 bereitgestellte Spargelstange 105 durch den einen Greifer 131 erfasst werden. Durch Weiterdrehen des Stelleelementes 124 erfolgt nun eine erste Hubbewegung HUB1, währenddessen der Greifer 131 um 90° quer zur Drehachse D1, D2 verschwenkt wird, damit die Spargelstange 105' in der oberen Hubposition 117 von der Aufnahmeeinrichtung 104 in einer aufrechten Position aufgenommen werden kann, siehe Figur 5.

Während der Hubbewegung HUB1 befindet sich der Steg 124' des Stellelementes 124 in einem Bereich zwischen gegenüberliegenden Schlitzen 126 des ersten Stirnrades 112 und des zweiten Stirnrades 123, etwa wie in Figur 7 dargestellt, so dass eine Verdrehung des ersten Stirnrades 112 und des zweiten Stirnrades 123 nicht erfolgen kann. Die Aufnahme der Spargelstange 105' an der Aufnahmeeinrichtung 104 erfolgt an einer Bestückungsstation 135 der Aufnahmeeinrichtung 104, in der kein Schälen der Spargelstange 105 erfolgt. Ein Schälen der Spargelstangen 105 erfolgt erst nach Eingreifen des Stellelementes 124 in den nächsten Schlitz 126 des ersten Stirnrades 112, mittels dessen eine Verdrehung D1 des ersten Stirnrades 112 in der Drehrichtung 129 erfolgt. Die aufgenommene Schälstange 105' befindet sich nun in einer ersten Arbeitsstation 136 der Aufnahmeeinrichtung 104, so dass durch eine nachfolgende Hubbewegung HUB2 der Schneideinrichtung 106 sowie der Greifeinrichtung 130 die Spargelstange 105' sowie auch die weiteren in den Arbeitsstationen 136 befindlichen stromabwärts in Transportrichtung T angeordneten Spargelstangen 105 längsseitig geschält werden.

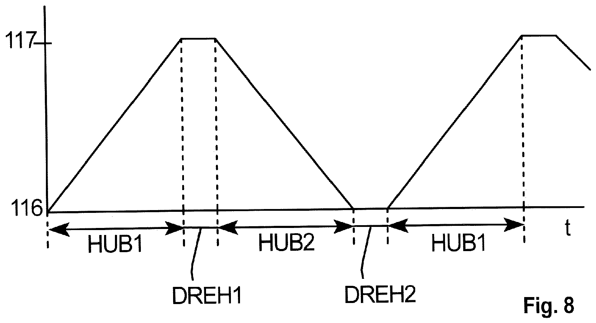

Nachdem die Schneideinrichtung 106 und die Greifeinrichtung 130 in die obere Hubposition 117 verbracht worden sind, greift der Steg 124' des Stellelementes 124 in einen Schlitz 126 des zweiten Stirnrades 123 ein, so dass nachfolgend das zweite Stirnrad 123 um 40° verdreht wird, siehe D1 in Figur 8, während das erste Stirnrad 112 stillsteht. Auf diese Weise wird eine weitere ungeschälte Spargelstange 105 an den Übergabeort 137 zum Erfassen durch die Greifeinrichtung 130 bereitgestellt. Nachdem der Steg 124' den Schlitz 126 des zweiten Stirnrades 123 verlassen hat, erfolgt eine zweite Hubbewegung HUB2, in der die Schneideinrichtung 106 und die Greifeinrichtung 130 aus der oberen Hubposition 117 in die untere Hubposition 116 bewegt werden. Hierbei erfolgt ein Schälen der in den Arbeitsstationen 136 gehaltenen Spargelstangen 105. Darüber hinaus wird eine bereits vollständig geschälte Spargelstange 105 von einer Entnahmestation 138 der Aufnahmeeinrichtung 104 mittels des zweiten Greifers 131" entnommen und an einen weiteren Übergabeort 137' einer Ablage übergeben. In einem weiteren Schritt erfolgt nun eine Drehbewegung T des ersten Stirnrades 112, da der Steg 124' des Stellelementes 124 nun wieder in einen Schlitz 126 des ersten Stirnrades 112 eingreift. Die in den Aufnahmen 111 angeordneten Spargelstangen 105 können nun in einer in Transportrichtung T vorne angeordneten weiteren Arbeitsstation 136 durch die Messerpaare 114 winkelversetzt geschält werden.

Es sind sechs Messerpaare 114, somit sechs Arbeitsstationen 136 vorgesehen, so dass durch einen Winkelversatz von 30° um die Drehachse D1 ein vollständiges sequenzielles Schälen der Spargelstangen 105 erzielt werden kann.

Das Greif-Koppelmodul 132 sowie das Schneid-Koppelmodul 115 sind derart ausgelegt, dass die Hubbewegung HUB1, HUB2 im Wesentlichen erfolgt, während das erste Stirnrad 112 und zweite Stirnrad 123 stillstehen. Die Bewegung der Schneideinrichtung 106 und der Greifeinrichtung 130 kommt einer Sinusbewegung nahe, wobei die Verdrehung des ersten Stirnrades 112 und des zweiten Stirnrades 123 im Bereich der geringsten Wegänderung pro Zeit erfolgt, siehe Figur 8.

Die Aufnahmeeinrichtung 104, die Schneideinrichtung 106, die Zuführ-/Abführeinrichtung 107, die Koppeleinrichtung 109 und die Antriebseinrichtung 108 bilden eine gemeinsame Baueinheit, oberhalb und/oder unterhalb derselben jeweils ein Vorratsbehälter zur Aufnahme von Reinigungsflüssigkeit angeordnet sein kann, wie im folgenden Ausführungsbeispiel näher beschrieben wird.

Der Schälautomat gemäß den Figuren 9 bis 13 weist als wesentliche Komponenten eine Aufnahmeeinrichtung 1 mit einer Mehrzahl von Halteelementen 10 zum Halten der Spargelstangen 2 in einer aufrechten Position, eine Schneideinrichtung 3 zum Schälen der Spargelstangen 2 in eine Längsrichtung 4 derselben, eine Transporteinrichtung 5 zum Bewegen der Aufnahmeeinrichtung 1, eine Reinigungseinrichtung 6 zum Säubern der Spargelstangen 2 sowie der Schneideinrichtung 3 und ein die Aufnahmeeinrichtung 1, die Schneideinrichtung 3, die Transporteinrichtung 5 sowie die Reinigungseinrichtung 6 umgebendes Gehäuse 7 auf. Darüber hinaus ist eine Antriebseinheit 8 vorgesehen, die der Betätigung sowohl der Transporteinrichtung 5 als auch der Schneideinrichtung 3 und der Aufnahmeeinrichtung 1 dient.

Die Transporteinrichtung 5 ist als ein Transportkarussell ausgebildet mit einem kreischeibenförmigen Trägerkörper 9 und daran randseitig gehaltenen Halteelementen 10. Die Halteelemente 10 sind beispielsweise in an sich bekannter Weise als Haltetulpen ausgebildet. Sie umfassen einen becherförmigen Grundkörper 11 mit einer Öffnung zum Einführen der Spargelstangen 2, eine in dem Grundkörper 11 angeordnete, nicht dargestellte Innenmembran sowie ebenfalls nicht dargestellte Mittel zur Beaufschlagung der Innenmembran mit einem Druck. Indem die Innenmembran mit Druck beaufschlagt wird, legt diese sich an ein in den Grundkörper 11 eingeführtes freies Ende der Spargelstange 2 formschlüssig an und fixiert die Spargelstange 2 in dem Halteelement 10. Die Spargelstange 2 kann aus den Halteelementen 10 entnommen werden, nachdem der Innendruck abgebaut ist. Insgesamt sind gleichmäßig in Umfangsrichtung acht Halteelemente 10 an dem kreisscheibenförmigen Trägerkörper 9 der Aufnahmeeinrichtung 1 befestigt.

Die Schneideinrichtung 3 weist insgesamt sechs Messereinheiten 12 mit jeweils zwei Messern 13 auf. Die Messer 13 können zum Schälen der Spargelstangen 2 an eine Mantelfläche 14 der Spargelstangen 2 angelegt werden. Die Messereinheiten 12 sind gemeinsam in die Längsrichtung 4 der Spargelstangen 2 verschiebbar gelagert. Die Messer 13 sind über Messerarme 15 in einer Ebene senkrecht zur Längsrichtung 4 der Spargelstangen 2 beweglich, so dass die Messer 13 bei einer zur Schälbewegung entgegengesetzten Rückbewegung beabstandet zu der Mantelfläche 14 der Spargelstangen 2 geführt werden können.

Die Reinigungseinrichtung 6 umfasst einen ersten Vorratsbehälter 15 zum Bevorraten der Reinigungsflüssigkeit 16 vor dem Reinigen der Spargelstangen 2 bzw. der Schneideinrichtung 3, einen die Reinigungsflüssigkeit 16 nach dem Reinigen aufnehmendes zweiten Vorratsbehälter 17, ein Betätigungselement 18 zur Beeinflussung eines Volumenstroms der aus dem ersten Vorratsbehälter 15 ausströmenden Reinigungsflüssigkeit 16 sowie Zuleitungen 19 zur Zuführung der Reinigungsflüssigkeit 16 zu den Spargelstangen 2 bzw. der Schneideinrichtung 3.

Das Betätigungselement 18, welches beispielsweise als ein Ventil, insbesondere als ein Magnetventil ausgebildet ist, wird über eine nicht dargestellte Steuereinheit angesteuert. Das Betätigungselement 18 kann als ein Absperrventil ausgebildet sein, welches ausschließlich in die Betriebszustände "geöffnet" bzw. "geschlossen" verbracht werden kann. Ebenfalls ist möglich, das Betätigungselement 18 als ein Betätigungselement zur Steuerung des Volumenstroms innerhalb bestimmter Grenzen auszubilden.

Die Zuleitung 19 verbindet den ersten Vorratsbehälter 15 mit den Spargelstangen 2 bzw. der Schneideinrichtung 3 zugeordneten Austrittsdüsen 20. Die Austrittsdüsen 20 sind so ausgebildet, dass die Reinigungsflüssigkeit 16 beim Verlassen der Zuleitung 19 bzw. der Düsen 20 zerstäubt wird. Zusätzlich trägt eine Druckerzeugungseinheit 21 der Reinigungseinrichtung 6 zur Zerstäubung der Reinigungsflüssigkeit 16 bei. In den Zuleitungen 19 wird die Reinigungsflüssigkeit 16 mit Druckluft beaufschlagt. Durch die Beaufschlagung der Reinigungsflüssigkeit 16 mit Druckluft und dem Vorsehen der Zerstäubungsdüsen 20 steigert sich die Reinigungswirkung bzw. reduziert sich der Bedarf an Reinigungsflüssigkeit 16. Dies ist insbesondere vor dem Hintergrund von Bedeutung, dass die Reinigungsflüssigkeit 16 nicht in einem Kreislauf geführt sondern lediglich einmalig zur Reinigung genutzt, anschließend in dem zweiten Vorratsbehälter aufgefangen und dann entsorgt wird.

In dem zweiten Vorratsbehälter 17 ist ein Auffangsieb 22 integriert. In dem Auffangsieb 22 werden die Schalen 23 nach dem Schälen der Spargelstangen 2 getrennt von der Reinigungsflüssigkeit 16 gesammelt.

Nach einer alternativen Ausführungsform der Erfindung kann die Reinigungsflüssigkeit 16 bereits im ersten Vorratsbehälter 15 mit Druck beaufschlagt werden. Es ist ebenfalls möglich, auf die Druckbeaufschlagung der Reinigungsflüssigkeit 16 vollständig zu verzichten. Das Vorsehen der Düsen 20 und deren Ausbildung als Zerstäubungsdüsen sind ebenfalls optional.

Die Druckerzeugungseinheit 21 kann zur Druckbeaufschlagung der Reinigungsflüssigkeit 16 und zur Druckbeaufschlagung der Innenmembran der Halteelemente 10 gleichermaßen genutzt werden. Ebenfalls ist möglich, eine separate, nicht dargestellte Druckerzeugungseinheit für die Druckbeaufschlagung der Innenmembran der Halteelemente 10 zu verwenden.

Die Druckerzeugungseinheit 21 sowie die Antriebseinheit 8 sind gleichermaßen mit einer elektrischen Kleinspannung betreibbar. Beispielsweise können die Druckerzeugungseinheit 23 und die Antriebseinheit 8 an einer 24 V-Gleichspannung oder mit einer 12 V-Gleichspannung betrieben werden. Zusammen mit der autarken, dass heißt auf einen Frischwasseranschluss verzichtenden Reinigungseinrichtung 6 bietet dies die Möglichkeit, den Schälautomaten als einen autarken Schälautomaten zu betreiben. Zur Energieversorgung dient beispielsweise ausschließlich die Batterie eines Nutzfahrzeugs (24 V-Gleichstrom) oder eines Personenwagens (12 V-Gleichstrom). Denkbar ist auch, die erforderliche elektrische Energie mittels eines verbrennungsmotorisch angetriebenen Generators, insbesondere mittels eines dieselelektrischen Stromerzeugungsaggregats zur Verfügung zu stellen. Der autarke Schälautomat kann demzufolge beispielsweise auf einem Wochenmarkt, im Bereich mobiler Spargelverkaufsstände oder unmittelbar während der Ernte auf dem Anbaufeld eingesetzt werden.

Der erste Vorratsbehälter 15 kann hierbei beispielsweise als eine bei Trinkwasserspendern eingesetzte Wasserflasche mit einem Volumen von 18 l oder mehr ausgebildet sein. Der erste Vorratsbehälter 15 kann als ein wechselbarer Vorratsbehälter 15 ausgebildet sein derart, dass ein leerer Vorratsbehälter entnommen und gegen einen vollen Vorratsbehälter ersetzt wird.

Das Gehäuse 7 ist als ein langgestrecktes säulenförmiges, insbesondere zylinderförmiges Gehäuse 7 ausgebildet. In einem oberen Bereich 24 des Gehäuses 7 ist der erste Vorratsbehälter 15 mit den Zuleitungen 19, den Düsen 20 und der Druckerzeugungseinheit 22 angeordnet. In einem unteren Bereich 25 des Gehäuses 7 ist der zweite Vorratsbehälter 17 angeordnet. Zwischen dem oberen Bereich 24 und dem unteren Bereich 25 sind in einem mittleren Bereich 26 des Gehäuses 7 die Schneideinrichtung 3, die Aufnahmeeinrichtung 1 sowie die Transporteinrichtung 5 vorgesehen. Das Gehäuse 7 kann teilweise transparent ausgebildet sein. Beispielsweise kann das Gehäuse 7 in dem mittleren Bereich 26 transparent ausgebildet sein. Indem der mittlere Bereich 26 des Gehäuses 7 transparent ausgebildet ist, kann der Schälvorgang visuell überwacht werden. Beispielsweise kann das Gehäuse 7 im oberen Bereich 24 zumindest abschnittsweise transparent ausgebildet sein. Hierdurch kann beispielsweise die Restmenge an zu Verfügung stehender Reinigungsflüssigkeit 16 in dem ersten Vorratsbehälter 15 überwacht werden.

An dem Gehäuse 7 sind Räder 27 befestigt. Die Räder 27 erleichtern den Transport des autarken Schälautomaten.

In dem zylindrischen Gehäuse 7 ist der kreisscheibenförmige Trägerkörper 9 der Transporteinrichtung 5 zentriert im Uhrzeigersinn (Drehrichtung 40) angeordnet. Der Trägerkörper 9 kann um eine Drehachse 28 desselben, welche senkrecht zu einer Erstreckungsebene 29 des Trägerkörpers 9 orientiert angeordnet ist, rotiert werden.

Der Trägerkörper 9 kann gedanklich in acht kuchenstückförmige Teilsegmente 30 unterteilt werden. Die Teilsegmente 30 definieren acht über den Umfang des Trägerkörpers 9 gleichmäßig verteilte Arbeitsstationen. Jede Arbeitsstation 30 ist hierbei ein Winkel 31 von 45° zugeordnet. Eine erste Arbeitsstation 32 ist als eine Aufnahmestation ausgebildet. In der Aufnahmestation 32 werden die Spargelstangen in das Halteelement 10 der Aufnahmeeinrichtung 1 eingesetzt. Hierzu werden die Spargelstangen 2 dem Schälautomaten sequentiell mittels eines Magazins 33 in eine Zuführrichtung 34 zugeführt. Im Bereich der Aufnahmestation 32 wird eine einzelne, unterhalb des zugehörigen Halteelements 10 bereitgestellte Spargelstange 2 mittels einer Greifeinheit 35 an ihrer Mantelfläche 14 gefasst und mit einem freien Ende der Spargelstange 2 voran in das Halteelement 10 eingeführt. Dort wird die Spargelstange 2 in bekannter Weise mithilfe der Innenmembran festgelegt.

Eine letzte Arbeitsstation 36 ist als eine Entnahmestation ausgebildet. In der Entnahmestation 36 wird die Spargelstange 2 aus dem Halteelement 10 entnommen. Dies kann beispielsweise mittels eines weiteren Manipulators (Greifeinheit) geschehen. Beispielsweise können die Spargelstangen 2 beim Lösen des Halteelements 10 entlang einer als Warenrutsche 37 dienenden schrägen Ebene aus dem Gehäuse 7 herausgeführt und in eine Auffangschale 38 bevorratet werden.

Um die Spargelstangen 2 der Aufnahmestation 32 zuzuführen und von der Entnahmestation 36 aus dem Gehäuse 7 herauszuführen, weist das Gehäuse 7 im Bereich der Aufnahmestation 32 und der Entnahmestation 36 nicht dargestellte Ausnehmungen auf.

Zwischen der Aufnahmestation 32 und der Entnahmestation 36 sind insgesamt sechs weitere Arbeitsstationen 30 angeordnet, die als Schälstationen 39 ausgebildet sind. Jeder Schälstation 39 ist hierbei eine Messereinheit 12 zugeordnet. An jeder Schälstation 39 wird ein Teil der Mantelfläche 14 der Spargelstangen 2 geschält.

Der Schälautomat wird in einem Taktbetrieb betrieben, wobei die Spargelstangen 2 sequentiell zunächst der Aufnahmestation 32, dann den sechs Schälstationen 39 und abschließend der Entnahmestation 36 zugeführt werden. Jede Spargelstange 2 befindet sich demzufolge für die Dauer von acht Arbeitstakten in dem Schälautomaten, wobei jeweils bis zu acht Spargelstangen 2 bearbeitet werden. Je eine Spargelstange 2 befindet sich hierbei in der Aufnahmestation 32 und der Entnahmestation 36. Insgesamt sechs Spargelstangen 2 sind im Bereich der Schälstationen 39 angeordnet. Mittels der Antriebseinheit 8 wird der scheibenförmige Trägerkörper 9 im Taktbetrieb rotiert, wobei die Spargelstangen 2, welche in den Halteelementen 10 gehalten werden, entlang einer als eine Kreisbahn 41 ausgebildeten Transportbahn im Uhrzeigersinn 40 bewegt werden. Da die Messereinheiten 12 - bezogen auf die Kreisbahn 41 - winkelgleich angeordnet sind bzw. - bezogen auf die Aufhängung - strahlenförmig von der Drehachse 28 der Transporteinrichtung 5 abragen, werden die Spargelstangen 2 während des Transports derselben von einer Schälstation zur nächsten um einen vorgegebenen Drehwinkel um ihre Längsrichtung 4 rotiert. Bei insgesamt sechs Messereinheiten 12 mit jeweils 2 auf gegenüberliegenden Seiten der Mantelfläche 14 anliegenden Messern 13 ergibt sich der Drehwinkel zu 30°. Um die Rotation des scheibenförmigen Trägerkörpers 9 um die Drehachse 28 mit der Eigenrotation der Halteelemente 10 zu synchronisieren, ist eine nicht dargestellte Koppeleinheit vorgesehen. Die Koppeleinheit kann beispielsweise als ein Rädergetriebe oder als ein ungleichförmig übersetzendes Getriebe ausgebildet sein.

Um die Taktbewegung mit der Drehung der Halteelemente 10 und der Hubbewegung der Messereinheiten 12 zu synchronisieren und durch die gemeinsame Antriebseinheit 8 auszuführen, weist die Antriebseinheit 8 einen elektrischen Antriebsmotor 42 und wenigstens einen mechanischen Wandler 43 auf. Der mechanische Wandler 43 ist nach dem vorliegenden Ausführungsbeispiel als ein Schubkurbelgetriebe ausgebildet zum Umsetzen einer Rotationsbewegung des elektrischen Antriebsmotors 42 in eine lineare Hubbewegung. Zur Synchronisation der Rotation der Halteelemente 10 (Aufnahmeeinrichtung 1), der Schneideinrichtung 3 sowie der Transporteinrichtung 5 kann der mechanische Wandler 43 mit einem nicht dargestellten, ungleichförmig übersetzten Zusatzwandler, zusammenwirken. Der Zusatzwandler kann beispielsweise als eine Steuerkulisse, als ein Malteserkreuzgetriebe oder dergleichen ausgebildet sein. Wie Figur 3 zeigt, gelingt es, einen ersten Teil der Hubbewegung des mechanischen Wandlers 43 als ein Arbeitshub 44 zum Schälen der Spargelstangen 2 und zum Entnehmen derselben aus dem Halteelement 10 ausgebildet werden. Ein zweiter Teil der Hubbewegung dient als Takthub 45 zum Betätigen der Transporteinrichtung 5, das heißt zur Rotation des scheibenförmigen Trägerkörpers 9 um die Drehachse 28. Ein dritter Teil der Hubbewegung ist als ein Bestückungshub 46 ausgebildet. Der Bestückungshub 46 dient zur Aufnahme der Spargelstange 2 in das Halteelement 10 der Aufnahmeeinrichtung 1.

Der Antriebsmotor 42 ist zum Schutz vor der Reinigungsflüssigkeit 16 verdeckt unter einer Haube 47 angeordnet.

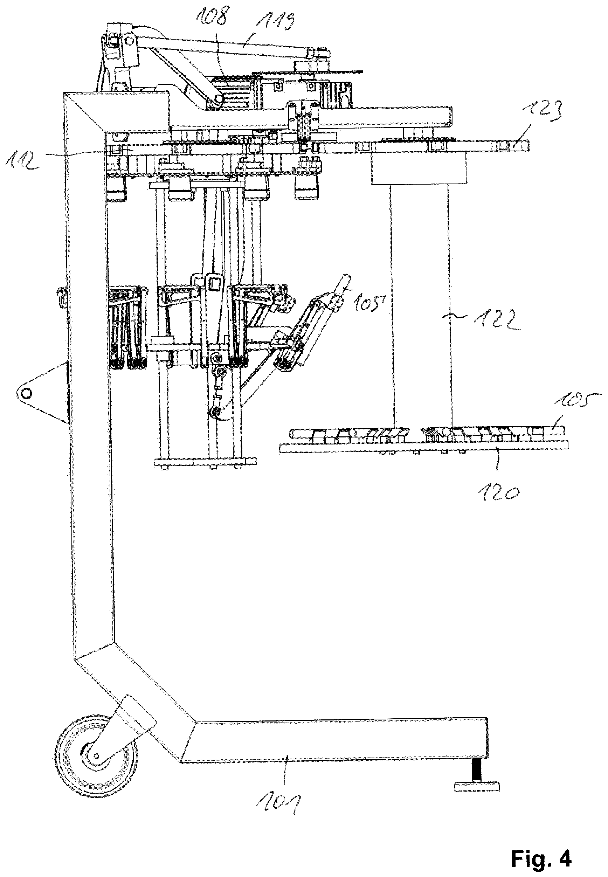

Nach einer zweiten Ausführungsform der Erfindung gemäß der Figuren 4 und 5 ist an das Gehäuse 7 des Schälautomaten ein Magazin 33 mit einer Zuführeinrichtung 48 seitlich angeflanscht. Die Zuführeinrichtung 48 umfasst zwei zueinander beanstandete und mittels einer Achse 50 verbundene Scheibenkörper 51, 52. Die Achse 50 ist um eine zweite Drehachse 49 drehbar gelagert. Ein erster Scheibenkörper 51 dient als Auflage für das Schälgut 2. Er weist hierfür nicht dargestellte Positionierhilfen, beispielsweise Prismenanordnungen, auf. Der zweite Scheibenkörper 52, welche horizontal beabstandet zu dem ersten Scheibenkörper 51 vorgesehen ist, wirkt über ein ungleichförmig übersetzendes Getriebe 53 und ein Verzweigungsgetriebe 54 mit dem zentralen Elektromotor 42 zusammen. Das ungleichförmig übersetzende Getriebe 53 ist beispielsweise nach Art eines Malteserkreuzgetriebes derart aufgebaut, dass die Transporteinrichtung 5 sowie die Zuführeinrichtung 48 von einem Betätigungselement 54 des ungleichmäßig übersetzenden Getriebes 53 je Umdrehung um einen vordefinierten Winkel von beispielsweise 36° weitergedreht werden.

Gleiche Bauteile und Bauteilfunktionen sind durch gleiche Bezugszeichen gekennzeichnet.

Der Trägerkörper 9 des Schälautomaten ist nach der zweiten Ausführungsform der Erfindung in zehn gleich große, kuchenstückförmige Teilsegmente 30 unterteilt. Die zehn Teilsegmente 30 definieren acht Arbeitsstationen 32, 36, 39 sowie zusätzlich zwei Ruhestationen 56. Die Ruhestationen 56 sind benachbart zu der Aufnahmestation 32 angeordnet. Durch das Vorsehen der Ruhestation 56 wird ein größerer geometrischer Freiraum für die der Aufnahmestation 32 zugeordnete Greifeinheit 35 geschaffen. Die Greifeinheit 35 ist so ausgebildet, dass je Betätigungssequenz des Schälautomaten eine Spargelstange 2 von dem ersten Scheibenkörper 51 der Zuführeinrichtung 48 aufgenommen, in eine Schwenkrichtung 57 aus der dargestellten horizontalen Orientierung in eine vertikale Orientierung gedreht und mit einer Linearbewegung 58 in das Halteelement 10 eingesetzt wird. Die Einsetzbewegung ist - wie vorstehend - mit der Hubbewegung der Messereinheiten 12 synchronisiert.

Die Hubbewegung der Messereinheiten 12 wird mittels des elektrischen Antriebsmotors 42 betätigt. Der Antriebsmotor 42 wirkt hierzu über das Verzögerungsgetriebe 54 mit einem Hebelgetriebe (Wandler 43) zusammen. Hierbei dient das Verzweigungsgetriebe 54, welches unmittelbar an den Antriebsmotor 42 angeflanscht ist, zur Verzweigung einer Abtriebsbewegung des Antriebsmotors 42.

Eine Drehbewegung der Transporteinrichtung 5 und der Zuführeinrichtung 48 erfolgt zeitversetzt. Wenn sowohl der erste Scheibenkörper 51 als auch die Transporteinrichtung 5 sich im Stillstand befindet, wird die auf der im ersten Scheibenkörper 51 abgelegte Spargelstange 2 mittels der Greifeinheit 35 gegriffen und angehoben. Anschließend wird die gegriffene Spargelstange 2 in das Halteelement 10 eingesetzt und die in den Schälstationen 39 befindlichen Spargelstangen werden geschält. In dieser Zeit, in der die Transporteinrichtung 5 stillsteht, wird die Zuführeinrichtung 48 um die zweite Drehachse 49 so verdreht, dass eine neue Spargelstange 2 in den Wirkbereich der Greifeinheit 35 gelangt. Nachdem die Zuführeinrichtung 48 gedreht und die Messereinheiten 12 außer Eingriff gebracht sind, wird anschließend die Transporteinrichtung 5 um die Drehachse 28 gedreht und die in den Halteelementen 10 vorgesehenen Spargelstangen 2 der nächsten Arbeitsstation 30 bzw. der nächsten Ruhestation 56 zugeführt.

## Patentansprüche

1. Schälautomat für langgestrecktes Schälgut
- mit einer Aufnahmeeinrichtung (104) zum Halten des Schälguts (105) in einer aufrechten Position
- mit einer Schneideinrichtung (106) zum Schälen des Schälguts (105) in einer längs des Schälguts (105) verlaufenden Schneidrichtung (106)
- mit einer Antriebseinrichtung (108) zum Bewegen der Aufnahmeeinrichtung (104) entlang einer senkrecht zur Schneidrichtung (106) verlaufenden Transportrichtung und zum Bewegen der Schneideinrichtung (106) entlang der Schneidrichtung, mit einer Koppeleinrichtung zur Kopplung der Antriebseinrichtung (108) mit der Aufnahmeeinrichtung (104) und der Schneideinrichtung (106),
- mit einer Zuführeinrichtung zum Zuführen des Schälguts (105),
- mit einer Abführeinrichtung zum Abführen des geschälten Schälguts (105),
- wobei die Aufnahmeinrichtung (104) eine um eine in Schneidrichtung (S) verlaufende Drehachse (D1) verdrehbares Aufnahme-Drehorgan (110) umfasst, an dessen einer Seite das Schälgut (105) gehalten ist, **dadurch gekennzeichnet,**
- **dass** die Zuführ- und/oder die Abführeinrichtung (107) um eine parallel zur Drehachse (D1) angeordnete weitere Drehachse (D2) verdrehbares Ablage-Drehorgan (120) umfasst,
- **dass** die Kopplungseinrichtung (109) ein das Aufnahme-Drehorgan (110) mit dem Ablage-Drehorgan (120) koppelndes Transport-Koppelmodul (125) umfasst, mittels dessen das Aufnahme-Drehorgan (110) und das Ablage-Drehorgan (120) abwechselnd um einen vorgegebenen Drehwinkel verdreht werden und dass das Transport-Koppelmodul (125) ein Stellelement (124) umfasst, das mit dem Aufnahme-Drehorgan (110) und dem Ablage-Drehorgan (120) so gekoppelt ist, dass das Aufnahme-Drehorgan (110) und das Ablage-Drehorgan (120) in einer gleichen Drehrichtung (129) verdreht werden.

2. Schälautomat nach Anspruch 1, **dadurch gekennzeichnet, dass** das Transport-Koppelmodul (125) ein mit dem Aufnahme-Drehorgan (110) drehfest verbundenes erstes Stirnrad (112) enthaltend eine Anzahl von Schlitze (126) und ein mit dem Ablage-Drehorgan (120) drehfest verbundenes zweites Stirnrad (123) enthaltend eine Anzahl von Schlitze (126) aufweist, wobei das mit konstanter Drehgeschwindigkeit angetriebene Stellelement (124) mit einem Steg (124') intermittierend in die Schlitze (126) des ersten Stirnrades (112) und des zweiten Stirnrades (123) eingreift.

3. Schälautomat nach Anspruch 1 oder 2, **dadurch gekennzeichnet, dass** das Stellelement (124) einen Blockierabschnitt (124") aufweist zur Kopplung mit dem ersten Stirnrad (112) oder dem zweiten Stirnrad (123), so dass das erste Stirnrad (112) bei Eingriffstellung des Stegs (124') in dem Schlitz (126) des zweiten Stirnrades (123) oder das zweite Stirnrad (123) bei Eingriffstellung des Stegs (124') in den Schlitz des ersten Stirnrades (112) unverdrehbar gehalten ist.

4. Schälautomat nach einem der Ansprüche 1 bis 3, **dadurch gekennzeichnet, dass** die Schneideinrichtung (106) eine Anzahl entlang eines Kreises auf einem Messerträger (113) angeordnete und jeweils winkelversetzt zueinander verlaufende Messerpaare (114) aufweist, die korrespondierend zu den einzelnen Aufnahmen (111) der Aufnahmeeinrichtung (104) in Schneidrichtung (S) hin- und her bewegbar angeordnet sind.

5. Schälautomat nach einem der Ansprüche 1 bis 4, **dadurch gekennzeichnet, dass** die Koppeleinrichtung (109) ein Schneid-Koppelmodul (115) aufweist, mittels dessen die Schneideinrichtung (106) in Schneidrichtung (S) hin- und her bewegbar ist.

6. Schälautomat nach einem der Ansprüche 1 bis 5, **dadurch gekennzeichnet, dass** die Koppeleinrichtung (109) ein Greif-Koppelmodul (132) zur Bewegung einer Greifeinrichtung (130) aufweist, mittels dessen ein auf dem Ablage-Drehorgan (120) abgelegtes ungeschältes Schälgut (105) erfassbar, durch Schwenkbewegung um 90° in eine aufrechte Position bringbar und durch eine Hubbewegung senkrecht zum Aufnahme-Drehorgan (110) an einer Bestückungsstation (135) der Aufnahmeeinrichtung (104) zuführbar ist.

7. Schälautomat nach den Ansprüchen 5 und 6, **dadurch gekennzeichnet, dass** das Transport-Koppelmodul (125) und das Schneid-Koppelmodul (115) und das Greif-Koppelmodul (132) mit derselben Antriebseinrichtung (108) gekoppelt sind.

8. Schälautomat nach einem der Ansprüche 1 bis 7, **dadurch gekennzeichnet, dass** die Antriebseinrichtung (108) durch einen einzigen Elektromotor gebildet ist, der mit einer elektrischen Kleinspannung betreibbar ist.

9. Schälautomat nach einem der Ansprüche 1 bis 8, **dadurch gekennzeichnet, dass** in einer Ebene oberhalb und unterhalb einer durch die Aufnahmeeinrichtung (104), die Schneideinrichtung (106), die Zuführ-/Abführeinrichtung (107), die Koppeleinrichtung (109) und die Antriebseinrichtung (108) gebildeten Baueinheit ein Vorratsbehälter zur Aufnahme von Reinigungsflüssigkeiten angeordnet ist.

10. Verfahren zum Schälen von langgestrecktem Schälgut, wobei das in einer aufrechten Position befindliche Schälgut (105) in einer Transportrichtung (T) taktweise einer Mehrzahl von Arbeitsstationen zugeführt wird, in denen das Schälgut (105) jeweils durch eine Hubbewegung einer um eine Längsachse des Schälguts (105) winkelversetzt angeordneten Schneideinrichtung (106) geschält wird, **dadurch gekennzeichnet,**
- **dass** während der Hubbewegung der Schneideinrichtung (106) zum Schälen des ortsfest und an kreisförmig angeordneten Arbeitsstationen (136) gehaltenen Schälguts (105) ein Schälgut (105) von einer Greifeinrichtung (130) erfasst und einer Bestückungsstation (135) zugeführt wird, in der das Schälgut (105) in der aufrechten Position gehalten wird,
- **dass** das in der Bestückungsstation (135) und in den Arbeitsstationen (136) gehaltene Schälgut (105) einerseits und das zuzuführende Schälgut (105) andererseits alternierend um eine kreisförmige Transportbahn (T) bewegt wird, wobei zwischen einer Verdrehung des gehaltenen Schälguts (105) und einer Verdrehung des zuzuführenden Schälguts (105) die Schneideinrichtung (106) in einer ersten Hubrichtung oder in einer entgegengesetzten zweiten Hubrichtung bewegt wird,
- und **dass** die Aufnahmeeinrichtung (104) und die Zuführeinrichtung (107) mittels eines Transport-Koppelmoduls (125) um parallel zueinander verlaufene Drehachsen (D1, D2) gleichsinnig und abwechselnd verdreht werden.

11. Verfahren nach Anspruch 10, **dadurch gekennzeichnet, dass** das Verdrehen der Bestückungsstation (136) und der Arbeitsstationen (136) sowie das Verdrehen des zuzuführenden Schälguts (105) in einem Zeitabschnitt (DREH1, DREH2) der Hubbewegung der Schneideinrichtung (106) erfolgt, in der die Wegänderung pro Zeit der Hubbewegung relativ gering ist.

12. Verfahren nach Anspruch 10 oder 11, **dadurch gekennzeichnet, dass** die Schneideinrichtung (106) und die Greifeinrichtung (130) entsprechend einem sinusförmigen Geschwindigkeitsverlauf zwischen einer oberen Hubposition (117) und einer unteren Hubposition (116) bewegt werden.

13. Verwendung eines Schälautomaten nach einem der Ansprüche 1 bis 9 in einem Maschinenpark, in dem mehrere Schälautomaten in einem Abstand zueinander angeordnet sind.

## Claims

1. An automatic peeling device for elongated peeled goods
- having a receiving means (104) for holding the peeled goods (105) in an upright position,
- having a cutting means (106) for peeling the peeled goods (105) in a cutting direction (106) which runs longitudinally along the peeled goods (105),
- having a driving means (108) for moving the receiving means (104) in a conveying direction which runs perpendicularly to the cutting direction (106) and for moving the cutting means (106) in the cutting direction,
- having a coupling means for coupling the driving means (108) to the receiving means (104) and the cutting means (106),
- having a feeding means for feeding in the peeled goods (105),
- having a discharging means for discharging the peeled goods (105),
wherein the receiving means (104) comprises a receiving rotary member (110) which is rotatable about a rotary axis (D1) which runs in the cutting direction (S), on one side of said rotary member the peeled goods (105) are held,
**characterized in that**
the feeding and/or the discharging means (107) comprise/comprises a depository rotary member (120) which is rotatable to a further rotary axis (D2) which is arranged parallel to the rotary axis (D1),
**in that** the coupling means (109) comprises a conveying coupling module (125) which couples the receiving rotary member (110) to the depository rotary member (120), with which conveying coupling module the receiving rotary member (110) and the depository rotary member (120) are alternatingly rotated about a predetermined angle of rotation
and **in that** the conveying coupling module (125) comprises an actuator (124) which is coupled to the receiving rotary member (110) and the depository rotary member (120) such that the receiving rotary member (110) and the depository rotary member (120) are rotated in a same direction of rotation (129).

2. The automatic peeling device according to Claim 1, **characterized in that** the conveying coupling module (125) has a first spur wheel (112) which is non-rotatably connected to the receiving rotary member (110), said first spur wheel having a number of slits (126) and a second spur wheel (123) which is non-rotatably connected to the depository rotary member (120), said second spur wheel having a number of slits (126), wherein the actuator (124), which is driven at a constant speed of rotation, intermittently engages with the slits (126) of the first spur wheel (112) and of the second spur wheel (123) via a ridge (124').

3. The automatic peeling device according to Claim 1 or 2, **characterized in that** the actuator (124) has a blocking portion (124") for coupling to the first spur wheel (112) or the second spur wheel (123), such that, in the engagement position of the ridge (124'), the first spur wheel (112) is unrotatably held in the slit (126) of the second spur wheel (123) or, in the engagement position of the ridge (124'), the second spur wheel (123) is unrotatably held in the slit of the first spur wheel (112).

4. The automatic peeling device according to any one of Claims 1 to 3, **characterized in that** the cutting means (106) has a number of blade pairs (114) arranged along a circle on a blade carrier (113), each of which run angularly offset to each other and are arranged movably back and forth in a cutting direction (S) corresponding to the individual receptacles (111) of the receiving means (104).

5. The automatic peeling device according to any one of Claims 1 to 4, **characterized in that** the coupling means (109) have a cutting coupling module (115) with which the cutting means (106) is movable back and forth in the cutting direction (S).

6. The automatic peeling device according to any one of Claims 1 to 5, **characterized in that** the coupling means (109) has a gripping coupling module (132) for moving a gripping means (130), by means of which gripping coupling module unpeeled peeled goods (105) which have been deposited on the depository rotary member (120) are detectable, movable into an upright position by a pivotal movement of 90°, and feedable into an inserting station (135) of the receiving means (104) by a lifting movement which is perpendicular to the receiving rotary member (110).

7. The automatic peeling device according to Claims 5 and 6, **characterized in that** the conveying coupling module (125) and the cutting coupling module (115) and the gripping coupling module (132) are coupled to the same driving means (108).

8. The automatic peeling device according to any one of Claims 1 to 7, **characterized in that** the driving means (108) is formed from a single electric motor, which is operable with extra-low voltage.

9. The automatic peeling device according to any one of Claims 1 to 8, **characterized in that** a reservoir for receiving cleaning fluids is arranged on a level above and below an assembly formed by the receiving means (104), the cutting means (106), the feeding/discharging means (107), the coupling means (109) and the driving means (108).

10. A method for peeling elongated peeled goods, wherein the peeled goods (105), being in an upright position, are, in a conveying direction (T), cyclically fed into a plurality of working stations, in which the peeled goods (105) are respectively peeled by a lifting movement of a cutting means (106) which is angularly offset from a longitudinal axis of the peeled goods (105),
**characterized**
- **in that**, during the lifting movement of the cutting means (106) for peeling the peeled goods (105) which are in a fixed location and held in circularly arranged working spaces (136), a peeled good (105) is detected by a gripping means (130) and fed into an inserting station (135), in which the peeled good (105) is held in the upright position,
- **in that** the peeled goods (105) held in the inserting station (135) and in the working stations (136) on the one hand and the peeled goods (105) which are to be fed in on the other hand are alternatingly moved about a circular conveyor track (T), wherein, between a rotation of the held peeled goods (105) and a rotation of the peeled goods (105) which are to be fed in, the cutting means (106) is moved in a first lifting direction or in an opposite second lifting direction,
and
- **in that** the receiving means (104) and the feeding means (107) are rotated in the same sense and alternatively about rotary axes (D1, D2) which run parallel to each other by means of a conveying coupling module (125).

11. The method according to Claim 10, **characterized in that** the rotating of the inserting station (136) and the working stations (136) as well as the rotating of the peeled goods (105) which are to be fed in occurs in a time frame (DREH1, DREH2) of the lifting movement of the cutting means (106), in which the displacement per time of the lifting movement is relatively minor.

12. The method according to Claim 10 or 11, **characterized in that** the cutting means (106) and the gripping means (130) are moved according to a sinusoidal speed curve between an upper lift position (117) and a lower lift position (116).

13. A use of an automatic peeling device according to any one of Claims 1 to 9 within a machinery in which multiple automatic peeling devices are arranged spaced from one another.

## Revendications

1. Automate d'épluchage pour produit à éplucher de forme allongée,
- avec un dispositif de réception (104) pour maintenir le produit à éplucher (105) dans une position debout,
- avec un dispositif de coupe (106) pour éplucher le produit à éplucher (105) dans une direction de coupe (106) s'étendant dans le sens longitudinal du produit à éplucher (105),
- avec un dispositif d'entraînement (108) pour le déplacement du dispositif de réception (104) dans une direction de transport qui s'étend perpendiculairement à la direction de coupe (106) et pour le déplacement du dispositif de coupe (106) dans la direction de coupe, avec un dispositif de couplage pour le couplage du dispositif d'entraînement (108) avec le dispositif de réception (104) et le dispositif de coupe (106),
- avec un dispositif d'alimentation pour l'alimentation en produit à éplucher (105),
- avec un dispositif de déchargement pour le déchargement du produit à éplucher (105) ayant été épluché,
- sachant que le dispositif de réception (104) comprend un organe rotatif de réception (110) pouvant tourner autour d'un axe de rotation (D1) s'étendant dans la direction de coupe (S), sur l'un des côtés duquel le produit à éplucher (105) est maintenu,
**caractérisé en ce que**
- le dispositif d'alimentation et / ou le dispositif de déchargement (107) comprend un organe rotatif de déchargement (120) pouvant tourner autour d'un autre axe de rotation (D2) disposé parallèlement par rapport à l'axe de rotation (D1)
- le dispositif de couplage (109) comprend un module de couplage de transport (125), destiné au couplage de l'organe rotatif de réception (110) et de l'organe rotatif de déchargement (120), au moyen duquel l'organe rotatif de réception (110) et l'organe rotatif de déchargement (120) peuvent être tournés alternativement sur un angle de rotation prédéterminé, et que le module de couplage de transport (125) comprend un élément de réglage (124), qui est couplé avec l'organe rotatif de réception (110) et l'organe rotatif de déchargement (120) de manière à ce que l'organe rotatif de réception (110) et l'organe rotatif de déchargement (120) soient tournés dans une même direction de rotation (129)

2. Automate d'épluchage selon la revendication 1, **caractérisé en ce que** le module de couplage de transport (125) présente un premier pignon droit (112), qui, comprenant une pluralité de fentes (126), est relié solidaire en rotation à l'organe rotatif de réception (110), et un deuxième pignon droit (123), qui, comprenant une pluralité de fentes (126), est relié solidaire en rotation à l'organe rotatif de déchargement (120), sachant que l'élément de réglage (124), entraîné à une vitesse de rotation constante, s'engage à intermittence, avec une patte (124'), dans la fente (126) du premier pignon droit (112) et du deuxième pignon droit (123).

3. Automate d'épluchage selon revendication 1 ou 2, **caractérisé en ce que** l'élément de réglage (124) présente une section de blocage (124") pour coupler le premier pignon droit (112) ou le deuxième pignon droit (123) de manière à ce que le premier pignon droit (112), quand la patte (124') est en prise dans la fente (126) du deuxième pignon droit (123), ou le deuxième pignon droit (123), quand la patte (124') est en prise dans la fente du premier pignon droit (112), soit maintenu sans possibilité de tourner.

4. Automate d'épluchage selon l'une des revendications 1 à 3, **caractérisé en ce que** le dispositif de coupe (106) présente plusieurs paires de couteaux (114), qui, disposées sur un porte-couteaux (113) et décalées angulairement les unes par rapport aux autres, le long d'un cercle, sont agencées, en correspondance avec les réceptacles individuels (111) du dispositif de réception (104), de manière à pouvoir être déplacées en va-et-vient dans la direction de coupe (S).

5. Automate d'épluchage selon l'une des revendications 1 à 4, **caractérisé en ce que** le dispositif de couplage (109) présente un module de couplage de coupe (115), au moyen duquel le dispositif de coupe (106) peut être déplacé en va-et-vient dans la direction de coupe (S).

6. Automate d'épluchage selon l'une des revendications 1 à 5, **caractérisé en ce que** le dispositif de couplage (109) présente un module de couplage de préhension (132) pour le déplacement d'un dispositif de préhension (130) au moyen duquel un produit à éplucher (105) non épluché, déposé sur l'organe rotatif de déchargement (120) peut être saisi, peut être amené dans une position debout, par un pivotement de 90 °, et peut être conduit, par un déplacement vertical par rapport à l'organe rotatif de réception (110), à une station de placement (135) du dispositif de réception (104).

7. Automate d'épluchage selon les revendications 5 et 6, **caractérisé en ce que** le module de couplage de transport (125) et le module de couplage de coupe (115) et le module de couplage de préhension (132) sont couplés par le même dispositif d'entraînement (108).

8. Automate d'épluchage selon l'une des revendications 1 à 7, **caractérisé en ce que** le dispositif d'entraînement (108) est formé par un seul moteur électrique, qui peut fonctionner à faible tension électrique.

9. Automate d'épluchage selon l'une des revendications 1 à 8, **caractérisé en ce que,** sur un plan situé au-dessus ou au-dessous d'une unité, formée par le dispositif de réception (104), le dispositif de coupe (106), le dispositif de déchargement (107), le dispositif de couplage (109) et le dispositif d'entraînement (108), est disposé un réservoir de liquides de nettoyage.

10. Procédé d'épluchage de produit à éplucher de forme allongée, sachant que le produit à éplucher (105), se trouvant dans une position debout, est conduit, de manière cadencée, dans une direction de transport (T), à une pluralité de stations de traitement, dans lesquelles le produit à éplucher (105) est respectivement épluché lors d'un déplacement d'un dispositif de coupe (106) qui s'effectue, avec décalage angulaire, autour d'un axe longitudinal du produit à éplucher (105),
**caractérisé en ce que**
- pendant le mouvement de déplacement du dispositif de coupe (106) pour l'épluchage du produit à éplucher (105), maintenu fixement, dans des stations de traitement (136) disposées en forme de cercle, un produit à éplucher (105) est saisi par un dispositif de préhension (130) et est conduit à une station de placement (135), dans lequel le produit à éplucher (105) est maintenu debout,
- le produit à éplucher (105), maintenu dans la station de placement (135) et dans la station de traitement (136), d'une part, et le produit à éplucher (105) amené, d'autre part, sont déplacés alternativement autour d'une voie de transport (T), sachant que, entre une rotation du produit à éplucher (105) maintenu et une rotation du produit à éplucher (105) amené, le dispositif de coupe (106) est déplacé dans une première direction de déplacement ou dans un deuxième direction de déplacement opposée, et
- le dispositif de réception (104) et le dispositif de déchargement (107) tournent dans le même sens et alternativement autour d'axes de rotation (D1, D2) s'étendant parallèlement l'un par rapport à l'autre, au moyen d'un module de couplage de transport (125).

11. Procédé selon la revendication 10,
**caractérisé en ce que** la rotation de la station de placement (136) et de la station de traitement (136), ainsi que la rotation du produit à éplucher (105) devant être amené s'effectuent dans une période de temps (DREH1, DREH2) du mouvement déplacement du dispositif de coupe (106) dans laquelle le changement de chemin par temps de course est relativement faible.

12. Procédé selon revendication 10 ou 11,
**caractérisé en ce que** le dispositif de coupe (106) et le dispositif de préhension (130) sont déplacés conformément à une vitesse à évolution sinusoïdale, entre une position de déplacement supérieure (117) et une position de déplacement inférieure (116).

13. Utilisation d'un automate d'épluchage selon l'une des revendications 1 à 9 dans un parc de machines, dans lequel plusieurs automates d'épluchage sont disposés à distance les uns des autres.
